# FASCICULE DE BREVET EUROPEEN

(11) **EP 2 605 491 B1**
(45) Date de publication et mention de la délivrance du brevet: **04.03.2020**
(21) Numéro de dépôt: 12196613.9
(22) Date de dépôt: 12.12.2012
(51) Int. Cl.: H04W 4/16, H04M 1/57, H04M 1/725, H04M 3/42

(54) **Procédé d'initiation d'une conversation**
Verfahren zur Initialisierung eines Gesprächs
Method for initiating a conversation

(30) Priorité: 15.12.2011 FR 1161697
(43) Date de publication de la demande: 19.06.2013
(73) Titulaire: IDEMIA France, 92700 Colombes (FR)
(72) Inventeur: Du Bourg De Luzencon, Baudouin, 92726 Nanterre Cedex (FR)
(74) Mandataire: Cabinet Beau de Loménie

(56) Documents cités:
- EP-A2- 0 715 442
- EP-A2- 1 843 560
- WO-A2-02/13547
- CN-A- 1 809 102
- GB-A- 2 463 111
- US-A- 5 001 709
- US-A1- 2005 094 788
- US-A1- 2005 243 982
- US-A1- 2005 258 938
- US-A1- 2008 248 790
- US-B1- 6 317 609

## Description

### Domaine technique et art antérieur

L'invention concerne les applications pour téléphones, notamment pour téléphone portable, ainsi que les entités électroniques portables utilisées pour fonctionnaliser de tels téléphones. Plus spécifiquement, elle concerne la fonction de présentation du numéro et ses fonctions dérivées.

Les réseaux et fournisseurs de service de téléphonie fixe et mobile proposent depuis de nombreuses années la fonction de présentation du numéro de la ligne de l'appelant.

Sur le réseau, fixe ou mobile, le numéro de la ligne de l'appelant (numéro MSISDN, pour « *Mobile Station ISDN Number* »), connu du commutateur auquel est connecté l'appelant, est inséré par ce commutateur dans les messages de signalisation du protocole de signalisation SS7 (ISUP).

Au niveau de la ligne de l'abonné, différentes implémentations sont mises en oeuvre, en fonction de la technologie choisie par l'opérateur local. Par exemple, aux Etats-Unis, le numéro est transmis par modulation de fréquence, entre les deux premières sonneries. Dans certains pays d'Europe du Nord, le numéro est transmis par le biais des tonalités audibles (DTMF) sur la ligne. Et quand la connexion de l'abonné est numérique (abonnement RNIS), le numéro est transmis sous forme du contenu d'une variable dans les instants qui suivent le message d'initialisation « *SETUP ».*

Certains opérateurs offrent de plus la possibilité à leurs abonnés de connaître l'identité de l'appelant (sous la forme prénom et nom), mais celle-ci est obtenue par l'opérateur par interrogation d'une base de données sur la base du numéro de l'appelant (annuaire inversé). La base de données peut être incomplète, ou ne pas être à jour. Enfin, de nombreux terminaux de téléphonie disposant d'un répertoire électronique comportent une fonctionnalité par laquelle ils interrogent le répertoire sur la base du numéro de l'appelant pour en extraire l'identité de celui-ci, s'il fait partie des contacts enregistrés de l'utilisateur appelé.

Mais on ne connaît pas de service permettant à l'appelant de personnaliser la présentation de son appel à destination de l'appeler, de manière à l'inciter, par une information pertinente, à décrocher.

Dans un domaine distinct, à savoir celui des communications half-duplex du type « *Push to talk* », fonctionnant sur certains réseaux de téléphonie mobile, on connaît des fonctions d'insertion d'une carte de visite, ou de personnalisation de l'identification de l'appelant. De telles fonctions sont présentées dans les documents WO 2008/046697 et US 2005/0287997.

Les services auxquels elles se rapportent sont distincts des services de téléphonie full-duplex et ne peuvent pas être interchangés avec ceux-ci, car les conditions d'utilisation sont différentes : dans une conversation *half-duplex,* les utilisateurs s'astreignent à une communication ordonnée avec des annonces de début et de fin de prise de parole, pour bénéficier d'une grande qualité d'écoute et éviter de devoir faire répéter un des intervenants, puisqu'un seul utilisateur prend la parole en même temps. A l'inverse, un service de conversation full-duplex a pour objet de fournir de l'interactivité, sans contrainte sur le mode de prise de parole entre les intervenants, et sans exigence particulière sur la qualité d'écoute.

Sur le plan de la mise en œuvre technique, les fonctions décrites dans les documents WO 2008/046697 et US 2005/0287997 utilisent un serveur spécifique de conversation « *Push to talk* »*,* une communication entre les terminaux et ce serveur par commutation de paquets de type réseau IP, ainsi que l'ouverture d'une session de communication entre les deux terminaux de communication à l'aide du protocole de gestion de sessions SIP (« *Session Initiation Protocol* »)*.* Un message d'identification ou un lien pointant vers un message d'identification est inséré par le terminal mobile appelant dans un message SIP INVITE ou dans une portion de texte libre d'un message SIP, et le serveur de conversation « *Push to talk* » transmet le message SIP incluant le message d'identification ou le lien vers le terminal appelé.

Un tel système, parce qu'il met en œuvre des messages SIP envoyés depuis le terminal appelant, ne peut pas être mis en œuvre dans une conversation téléphonique sur une ligne commutée.

Pour les conversations *full-duplex* sur les réseaux de téléphonie fixes et mobiles, utilisant une ligne commutée, il a été proposé dans le document US2010/0087182, un service de choix de la sonnerie devant se déclencher chez l'utilisateur appelé. Ce service utilise une application devant être présente sur le téléphone appelé, ainsi qu'un serveur sur lequel sont stockés les fichiers audio des sonneries pouvant être choisies.

Au cours d'une première phase, l'appelant établit une connexion avec le serveur, choisit une sonnerie parmi différentes sonneries proposées par le serveur et demande à ce dernier de transmettre le fichier de la sonnerie choisie à un correspondant pressenti. L'appelant peut aussi enregistrer sur le serveur un message audio devant servir de sonnerie et qui est ensuite transmis au futur correspondant. Dans une deuxième phase, l'appelant appelle directement son correspondant, ou, alternativement, le serveur appelle le correspondant au nom de l'appelant. L'application du téléphone appelé déclenche la sonnerie après avoir reconnu le numéro de l'appelant.

Ce procédé présente l'inconvénient que la définition de la sonnerie est faite sur le serveur distant. Ainsi, le terminal mobile de l'appelant doit être en mesure de se connecter à ce serveur pour permettre à l'appelant de choisir la sonnerie ou d'enregistrer son message audio. Cela ne peut pas se faire en l'absence de connexion -en dehors de la couverture du réseau mobile par exemple- ou lorsque les ressources du serveur sont indisponibles -si celui-ci est trop sollicité par rapport à ses capacités, notamment. De plus ce système nécessite la mise en œuvre et la maintenance d'un serveur distant, ce qui peut être coûteux et complexe à mettre en œuvre.

US2005/0094788 décrit un procédé dans lequel une information personnalisée est transmise avec l'appel.

US2008/0248790 décrit un système dans lequel une application de la carte Sim du terminal appelée affiche une information codée dans l'appel.

GB2463111 décrit un procédé dans lequel une information personnalisée, qui peut être entrée manuellement, est transmise avec l'appel, par exemple en utilisant le protocole SIP.

EP1843560 décrit un procédé dans lequel une information personnalisée est transmise avec l'appel.

US2005/0258938 décrit un téléphone portable équipé pour émettre un MMS contenant notamment un texte et qui est utilisé pour former une annonce d'appel personnalisée.

WO02/13547 décrit encore un procédé dans lequel une information personnalisée est transmise avec l'appel.

C'est essentiellement également le cas en ce qui concerne le document EP0715442, qui, date de 1994 et présente un mode de réalisation de téléphonie fixe.

Les documents US 2005/243982, US 5 001 709, et CN 1 809 102 décrivent des procédés dans lequel on émet des informations supplémentaires avec un appel.

Le document US 6 317 609 décrit un procédé pour transmettre une image alors qu'un appel est en cours.

### Résumé de l'invention

Pour résoudre ces problèmes, l'invention consiste en un procédé d'initiation d'une conversation selon la revendication 1.

Grâce à ce procédé, il n'est pas nécessaire de mettre en oeuvre un serveur distant ou une application distante pour proposer le service à l'utilisateur, et celui-ci a la garantie de pouvoir composer, voire corriger son contenu de présentation indépendamment de l'accès à un tel élément distant à un instant donné. Le service rendu est immédiat et l'expérience utilisateur est donc supérieure. Le terminal de télécommunications est un terminal mobile ou fixe, relié à réseau de télécommunications cellulaire ou filaire. Aussi, dans le procédé selon la revendication 1, l'appel du terminal à appeler n'est effectué qu'après l'écoulement d'une durée prédéterminée après l'émission du contenu de présentation. Cela permet de garantir que le contenu de présentation a bien été acheminé à son destinataire. Dans une variante également du procédé selon la revendication 1, l'appel n'est effectué qu'après réception d'un accusé de réception du contenu attestant la réception de celui-ci par le terminal de télécommunications à appeler.

Selon une caractéristique avantageuse, l'obtention d'un contenu de présentation comprend l'obtention d'un texte de l'utilisateur du terminal appelant, par exemple dans une fenêtre pop-up.

Selon une caractéristique avantageuse, le contenu de présentation est émis avec un nom de l'appelant pour que ledit nom soit affiché complété par ledit contenu.

Selon une caractéristique avantageuse, le contenu est signé par des moyens cryptographiques ou crypté.

L'invention consiste aussi, selon un autre aspect, en une application informatique apte selon la revendication 8.

Ce mode de réalisation offre l'avantage d'une grande intégration du procédé d'initiation d'appel avec présentation du contenu dans le processus d'appel classique connu des utilisateurs, rapide et intuitif.

Selon une caractéristique avantageuse, l'application dispose d'un mode de fonctionnement dans lequel l'application demande à l'utilisateur d'identifier un contenu en réaction à la composition par l'utilisateur d'un numéro de téléphone (MSISDN encore appelé numéro de ligne) et d'une séquence alphanumérique de déclenchement de la fonction de définition d'un contenu.

Elle peut également disposer d'un mode de fonctionnement dans lequel elle se déclenche ou cherche à obtenir de l'utilisateur un contenu de présentation chaque fois que l'utilisateur compose un numéro de téléphone (numéro de ligne), et d'un mode de fonctionnement dans lequel elle demande à l'utilisateur à chaque fois que ce dernier compose un numéro de téléphone (numéro de ligne), s'il souhaite envoyer un contenu de présentation.

L'invention consiste enfin, selon un autre aspect, en une entité électronique portable selon la revendication 12. L'entité peut être ou comprendre une carte à microcircuit, par exemple de format ID-000, l'application étant par exemple enregistrée dans un microcircuit de la carte.

L'invention consiste aussi en un procédé de conversation audio initiée selon le procédé d'initiation évoqué.

L'invention va maintenant être décrite en relation avec les figures, qui sont tout d'abord rapidement présentées.

### Brève description des figures

La figure 1 représente un exemple d'architecture matérielle dans laquelle l'invention est mise en œuvre.
La figure 2 présente un terminal de télécommunications selon un mode de réalisation de l'invention
La figure 3 présente un scénario de mise en œuvre d'un mode de réalisation de l'invention.
La figure 4 présente un deuxième exemple d'architecture matérielle dans laquelle l'invention peut être mise en oeuvre.

### Exposé détaillé de l'invention

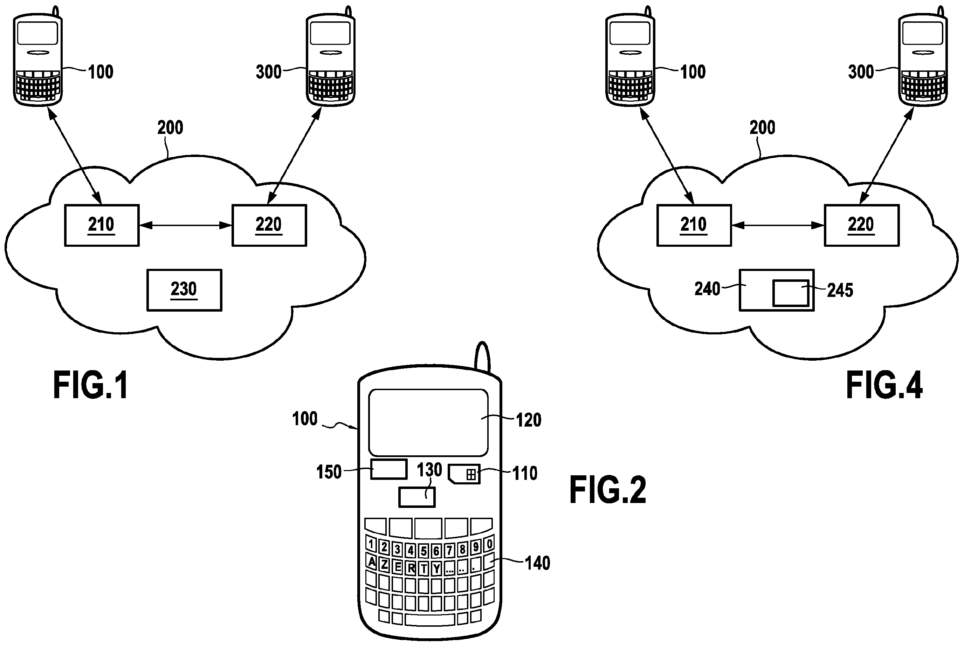

En figure 1, on a représenté deux terminaux mobiles de communication 100 et 300 communiquant avec un réseau de télécommunications 200 répondant à la norme GSM. Alternativement, d'autres réseaux de communication pourraient être utilisés. A titre d'exemple non limitatif, le réseau de communication peut être un réseau de téléphonie mobile conforme à l'une quelconque des normes technologiques (3G, 4G etc..). Les terminaux mobiles de communication 100 et 300 sont des téléphones portables. Alternativement, les terminaux sont des ordinateurs et communiquent par VOIP (voix sur IP) .

Le réseau 200 comprend des commutateurs (ou switchs) 210 et 220, avec lesquels les terminaux 100 et 300 sont en communication, respectivement. Le réseau 200 comprend aussi un centre de service 230 pour messages courts (SMS pour « *short message service* »)*.*

En figure 2, on a représenté le terminal de télécommunications 100 selon un mode de réalisation de l'invention. Le terminal de télécommunications 100 possède une fonction d'appel de terminaux tiers sur le réseau 200, connue en soi et qui ne sera pas décrit en détails ici.

Une carte à microcircuit 110, de format ID-000 (carte SIM, *« Subscriber identification Module* »), est insérée dans le terminal pour le personnaliser. Une application de présentation de l'appelant est enregistrée, dont le fonctionnement sera détaillé plus loin, dans la carte 110 (précisément dans la fonction STK « *SIM Tool Kit* » de la carte). La carte 110 est amovible.

Le terminal 100 comprend de plus un écran 120, un processeur 130 et un clavier alphanumérique 140, réel ou accessible via l'écran si celui-ci est tactile. Le terminal 100 comprend de plus une mémoire 150, un haut-parleur et un microphone, ainsi que des circuits pour établir une communication audio full-duplex, au cours de laquelle deux interlocuteurs peuvent parler en même temps, les ressources étant allouées simultanément pour la transmission du son dans un sens et dans le sens inverse.

A la place d'être présente dans la carte à microcircuit 110, l'application de présentation peut être présente dans la mémoire 150 du terminal 100, dans laquelle elle a alors été téléchargée via le réseau 200, à l'initiative de l'utilisateur. La carte à microcircuit 110 peut être fournie à l'utilisateur avec l'application de présentation de l'appelant pré-chargée par l'opérateur ayant émis la carte à microcircuit, ou l'application peut être chargée par un fournisseur de service sur la carte à microcircuit 110 ou dans la mémoire 150. Elle peut être également présente dans une entité électronique portable de nature différente de la carte à microcircuit 110, insérée dans le terminal pour personnaliser celui-ci.

Le terminal de télécommunications 300 présente des caractéristiques similaire au terminal de télécommunications 100, et dans le mode de réalisation décrit, il incorpore également l'application de présentation, soit dans une mémoire, soit dans une carte à microcircuit ou une autre entité électronique portable qui lui est liée. Les éléments du terminal de télécommunications 300 seront référencés dans le texte de manière parallèle à ceux du terminal de télécommunications 100, seul le chiffre des centaines étant modifié.

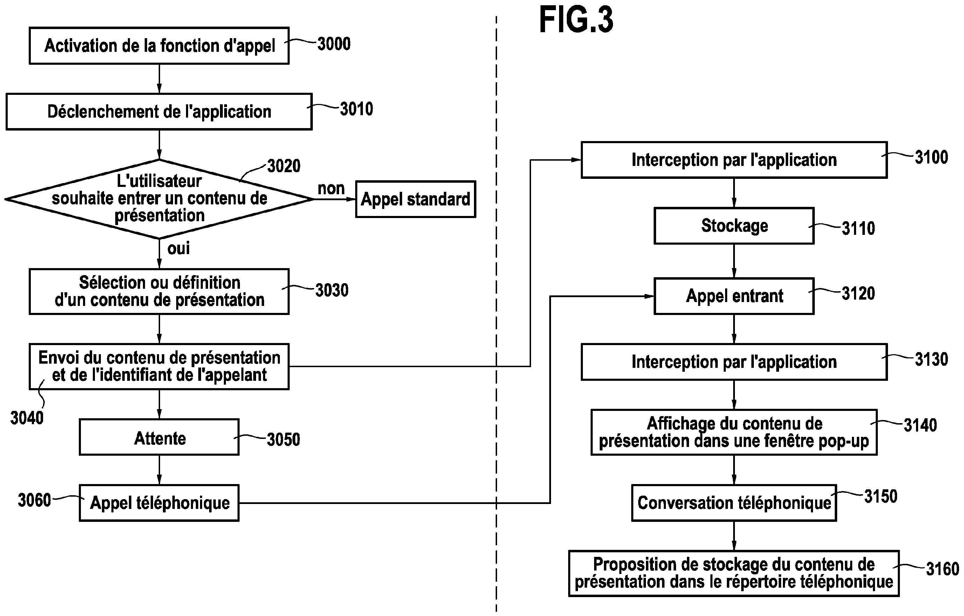

En figure 3, on a représenté un scénario de mise en œuvre de l'invention.

La mise en œuvre débute par une étape 3000 d'activation de la fonction d'appel du terminal 100. Cette étape peut comprendre la composition par l'utilisateur du numéro de la ligne du correspondant qu'il souhaite appeler (numéro MSISDN, c'est-à-dire le numéro de ligne).

Cette activation de la fonction d'appel est suivie d'une étape 3010 de déclenchement de l'application de présentation, et qui va ensuite être exécutée par le processeur 130. Selon deux variantes, soit l'application de présentation était en veille et elle réagit par elle-même à l'activation de la fonction d'appel, soit elle était éteinte, mais une fonction est installée pour la déclencher automatiquement lors de l'activation de la fonction d'appel.

Dans le mode de réalisation qui est décrit, l'application de présentation demande alors, au cours d'une étape 3020, à l'utilisateur s'il souhaite émettre un contenu de présentation à destination de son correspondant. Le contenu de présentation peut être le nom de l'appelant complété par un descriptif de présentation de la personne. La requête est présentée sur l'écran 120, par exemple dans une fenêtre pop-up, et l'utilisateur y répond à l'aide du clavier 140. D'autres modes de présentation de la requête et de réponse à celle-ci peuvent être mis en œuvre dans le cadre de variantes.

Si l'utilisateur répond de manière négative, l'application de présentation est désactivée ou mise en veille, et l'appel se poursuit de manière standard.

Si à l'inverse l'utilisateur répond de manière positive, l'application de présentation demande à l'utilisateur, au cours d'une étape 3030, par exemple via une fenêtre pop-up affichée sur l'écran 120, d'entrer le contenu de présentation. Dans le mode de réalisation présenté, celui-ci est un texte, et il est entré par l'utilisateur par le clavier 140. Alternativement, le contenu de présentation est un message sonore ou une vidéo enregistrée avec un microphone ou une caméra embarquée du terminal 100.

Dans une variante, l'utilisation de l'application d'émission d'un contenu de présentation est systématique. Dans une autre variante, c'est l'utilisateur qui, en composant une chaîne alphanumérique en plus du numéro de la ligne appelée (avant ou après celui-ci), déclenche la demande d'entrée d'un contenu de présentation. Encore dans une autre variante, l'application est déclenchée pour des contacts présélectionnés du répertoire téléphonique.

Dans une autre variante, l'utilisateur peut au stade de la demande d'entrée d'un contenu de présentation sélectionner des contenus de présentation déjà enregistrés dans la mémoire 150 du terminal 100, ou dans la carte à microcircuit 110. Ces contenus peuvent éventuellement être associés à plusieurs destinataires.

Une fois le contenu de présentation obtenu par le processeur 130 du terminal 100, ce dernier procède, au cours d'une étape 3040, à un envoi du contenu de présentation sous la forme d'un SMS émis à destination du correspondant. Si le contenu comprend du son ou de la vidéo, l'envoi prend la forme d'un MMS (message de type « *Multimedia Messaging Service »).*

Dans un mode de réalisation, le numéro de téléphone MSISDN du correspondant est composé à ce stade par l'utilisateur. Dans une autre variante, le numéro du correspondant MSISDN peut aussi être introduit entre les étapes 3020 et 3030.

Au cours de l'étape 3040, le terminal 100 envoie dans un unique SMS (ou MMS) d'une part le contenu de présentation, et d'autre part le numéro de la ligne de l'utilisateur du terminal 100 (numéro MSISDN), tel qu'indiqué dans la carte à microcircuit 110. Ainsi, le numéro de l'appelant est associé dans le message au contenu de présentation. De plus, le SMS présente un élément (format ou identifiant) permettant de reconnaitre qu'il a été préparé et émis par l'application de présentation.

Au cours d'une étape 3050 de temporisation, le terminal 100 attend quelques instants pour laisser le temps au SMS de parvenir à son destinataire. Dans un mode de réalisation, cette période d'attente est de 5 s. Le SMS est transmis dans le réseau 200 au centre de service de SMS 230, qui le transmet au terminal 300 sur la base de son numéro de ligne MSISDN.

Au cours d'une étape 3100, le SMS émis par le terminal 100 est reçu par le terminal 300.

Dans un mode de réalisation, la réception de tout SMS par ce terminal déclenche l'analyse du message par l'application de présentation qui était soit en veille soit inactive sur le terminal 300. Le SMS est reconnu par l'application de présentation comme ayant été émis par une autre application de présentation, et il est stocké dans la mémoire 350, au cours d'une étape 3110, sans être signalé au porteur du terminal 300. Il peut, dans une variante, être mémorisé dans la carte à microcircuit 310.

Dans un mode de réalisation particulier, si un SMS émis par une application de présentation était en mémoire et était associé à un numéro d'appel entrant, il est effacé, et remplacé par le SMS ainsi nouvellement reçu.

Au cours d'une étape 3060, le terminal 100 lance l'appel téléphonique à destination du correspondant, en composant le numéro MSISDN de celui-ci et en le communiquant au commutateur 210 avec lequel il est en relation sur le réseau 200. Dans une variante, l'appel n'est lancé qu'après réception d'un accusé de réception du SMS attestant la réception de celui-ci par le destinataire. Dans une variante, l'accusé de réception est envoyé par le terminal 300 uniquement après validation de l'appelé.

Le commutateur 210 se met alors en relation, via différents éléments du réseau 200, avec un commutateur 220 qui est en relation avec le terminal 300. Le réseau indique donc au terminal 300 qu'un appel le désignant est en cours, d'une manière connue en soi.

Le numéro de ligne de l'appelant (MSISDN) est présenté, d'une part parce que l'appelant a autorisé (ou n'a pas interdit) la fonction de présentation du numéro, et d'autre part parce que le réseau 200 sait transmettre, d'un commutateur à un autre, le numéro de la ligne appelante, par exemple dans des messages de la norme SS7.

Au cours d'une étape 3120, le terminal 300 constate la demande d'appel entrant. En réaction, l'application de présentation est déclenchée, au cours d'une étape 3130, et celle-ci recherche dans les SMS mémorisés et ayant été reçus en provenance d'autres applications de présentation, un contenu de présentation associé au numéro de ligne appelant (MSISDN) pour l'appel entrant en cours.

Le contenu de présentation est présenté à l'utilisateur du terminal 300 au cours d'une étape de présentation 3140, utilisant, selon des variantes, l'écran, par exemple avec une fenêtre pop-up, pour le texte ou la vidéo et le haut-parleur pour un message sonore, suivant la nature du contenu de présentation. Dans un mode de réalisation, une indication graphique ou alphanumérique indique explicitement que le contenu de présentation est « tel qu'indiqué par l'appelant », de manière à rappeler à l'utilisateur du terminal 300 que son opérateur téléphonique ou un autre intermédiaire n'intervient pas dans la définition du contenu ainsi présenté.

Dans une variante le terminal 300 n'affiche les contenus de présentation uniquement quand le numéro MSISDN de l'appelant n'est pas répertorié dans le répertoire téléphonique du terminal 300, ou au contraire, uniquement quand il l'est.

En fonction de ce contenu de présentation, l'utilisateur du terminal 3140 prend la décision de répondre, de rejeter l'appel ou d'ignorer celui-ci.

Une étape de conversation 3150 peut notamment avoir lieu. Dans ce cas, les deux terminaux 100 et 300 sont mis en relation par le réseau 200.

Enfin, de manière optionnelle, l'application de présentation peut proposer à l'utilisateur du terminal 300 de stocker le contenu de présentation reçu via le SMS en association avec le numéro de ligne de son correspondant dans le répertoire téléphonique de son terminal 300, dans la mémoire 350 de celui-ci ou dans la carte à microcircuit 310 insérée dans le terminal. Ce stockage est effectué au cours d'une étape 3160. En cas de refus de l'utilisateur, le contenu de présentation est effacé.

En figure 4 sont représentés les éléments de mis en oeuvre d'un deuxième mode de réalisation de l'invention. Comme pour le premier mode de réalisation, un terminal appelant 100 appelle un terminal appelé 300, via un réseau 200, la communication mettant en œuvre des commutateurs 210 et 220.

Dans ce mode de réalisation, le contenu de présentation est envoyé par le terminal 100 dans un message USSD (« *Unstructured Supplementary Service Data* »). Il est associé dans ce message à un l'identifiant MSISDN de l'appelant et à l'identifiant MSISDN de l'appelé. Le message USSD est envoyé à l'opérateur téléphonique qui fournit les services téléphoniques à l'utilisateur du terminal 100.

Celui-ci le reçoit et le traite avec un serveur 240 mettant en œuvre une application 245 de traitement des messages USSD comprenant un contenu de présentation. L'application identifie le message reçu comme étant un message USSD comprenant un contenu de présentation. Elle extrait du message l'identifiant MSISDN de l'appelé. Puis elle envoie un message à destination du terminal appelé, comprenant le contenu de présentation et l'identifiant MSISDN de l'appelant. Ce message envoyé par l'application 245 peut être de diverses natures. Il peut être un SMS ou un message USSD.

Le terminal 300 reçoit le message émis par l'application 245 et le traite comme décrit plus haut en relation avec le premier mode de réalisation.

L'application de présentation peut être sécurisée par une sécurité cryptographique conforme à une norme FIPS (pour « *Federal Information Processing Standards* »), par exemple la norme FIPS 140.

Par exemple, le contenu de présentation est crypté à l'aide d'une clé cryptographique accessible, par exemple dans la carte 110, par l'application de présentation de l'appelant. L'appelant envoie alors un message de présentation crypté ou une donnée de vérification cryptée, ou un message de présentation signé, au moyen de la clé.

L'appelant dispose également de la même clé cryptographique pour vérifier le contenu de présentation. La vérification peut être réalisée par décryptage ou par calcul d'un code d'authentification de message à partir des données reçues.

L'application étant fournie par un même fournisseur de service (opérateur téléphonique) il est facile d'échanger les clés de cryptage et vérification pour la réalisation de la sécurité cryptographique.

En alternative, un mécanisme de dérivation de clé peut être mis en œuvre pour crypter le contenu de présentation, par exemple une dérivation d'une clé-maître fournie par le fournisseur de service à partir du numéro de l'appelé. Ainsi, l'appelé auquel la même clé-maître aura été préalablement fournie, pourra dériver celle-ci au moyen de son numéro de téléphone et vérifier l'authenticité du contenu .

Le mécanisme cryptographique d'authentification, d'intégrité et/ou de signature peut être adapté pour répondre aux besoins de sécurité.

Dans une variante, le terminal ne reçoit pas une carte à microcircuit, mais comprend un microcircuit sécurisé intégré au terminal, et dans lequel est enregistré l'application de présentation.

Dans une variante, le contenu de présentation comprend une image, par exemple une photo de l'appelant, ou plus précisément du visage de l'appelant.

Dans une variante, le contenu de présentation n'est émis que si ce contenu n'a pas déjà été émis à destination du terminal de communication à appeler. En pratique, une manière d'implémenter cette fonction est la suivante : le terminal de télécommunications appelant maintien une liste d'identifiants des terminaux à destination desquels le contenu a déjà été émis (par exemple des numéros de téléphone), vérifie avant d'émettre un contenu de présentation si le terminal à appeler fait partie de cette liste, et émet le contenu si c'est la cas, et ne l'émet pas dans le cas contraire. A réception d'un identifiant d'appelant (numéro de ligne ou autre contenu codé sur moins d'octets), le terminal à appeler retrouve l'image correspondante dans sa mémoire, par exemple dans une table mettant en correspondance l'identifiant et l'image) et l'affiche sur son écran sur réception de l'appel correspondant.

L'invention ne se limite pas aux modes de réalisation décrits mais s'étend à toutes les variantes de ceux-ci entrant dans la portée des revendications.

## Revendications

1. Procédé d'initiation d'une conversation comprenant des étapes :
- d'obtention (3030) d'un contenu de présentation composé par un utilisateur d'un terminal de télécommunications appelant,
- puis, une fois ledit contenu obtenu, d'émission (3040) dudit contenu à destination d'un terminal de télécommunications à appeler (300),
- et d'appel (3060) par le terminal de télécommunication appelant (100) dudit terminal de télécommunications à appeler (300), l'appel (3060) comprenant une transmission par le terminal appelant (100) d'un identifiant de ligne dudit terminal à appeler à un commutateur téléphonique (210),
les étapes d'obtention puis d'émission du contenu étant également effectuées par ledit terminal de télécommunications appelant (100), l'émission (3040) dudit contenu comprenant l'émission d'un message SMS, d'un message USSD, ou d'un message MMS,
le procédé étant **caractérisé en ce que** l'appel du terminal à appeler n'est effectué qu'après :
- l'écoulement d'une durée prédéterminée (3050) après l'émission du contenu de présentation, ou
- réception d'un accusé de réception du contenu attestant la réception de celui-ci par le terminal de télécommunications à appeler.

2. Procédé d'initiation d'une conversation selon la revendication 1, dans lequel l'obtention (3030) d'un contenu de présentation comprend l'obtention d'un texte de l'utilisateur du terminal appelant.

3. Procédé d'initiation d'une conversation selon la revendication 2, dans lequel l'obtention (3030) d'un texte se fait dans une fenêtre pop-up.

4. Procédé d'initiation d'une conversation selon l'une des revendications de procédé d'initiation précédentes, dans lequel le contenu de présentation est émis avec un nom de l'appelant pour que ledit nom soit affiché complété par ledit contenu.

5. Procédé d'initiation d'une conversation selon l'une des revendications de procédé d'initiation précédentes, dans lequel le terminal de télécommunications est un terminal mobile.

6. Procédé d'initiation d'une conversation selon l'une des revendications de procédé d'initiation précédentes, dans lequel le contenu est signé par des moyens cryptographiques ou crypté.

7. Procédé de conversation audio initiée par un procédé d'initialisation selon l'une des revendications de procédé d'initiation précédentes.

8. Application informatique apte, quand elle est mise en œuvre par un processeur (130) d'un terminal de télécommunications (100), à exécuter les étapes d'un procédé selon l'une des revendications de procédé d'initiation précédentes.

9. Application selon la revendication précédente, disposant d'un mode de fonctionnement dans lequel l'application demande à l'utilisateur d'identifier un contenu de présentation en réaction à la composition par l'utilisateur d'un numéro de téléphone et d'une séquence alphanumérique de déclenchement de la fonction de définition d'un contenu.

10. Application selon l'une des revendications d'application précédentes, disposant d'un mode de fonctionnement dans lequel elle cherche à obtenir un contenu de présentation chaque fois que l'utilisateur compose un numéro de téléphone.

11. Application selon l'une des revendications d'application précédente, disposant d'un mode de fonctionnement dans lequel elle demande à l'utilisateur à chaque fois que l'utilisateur compose un numéro de téléphone, s'il souhaite envoyer un contenu de présentation .

12. Entité électronique portable (110) comportant une mémoire dans laquelle est enregistrée une application selon l'une des revendications d'application précédente.

13. Entité électronique portable selon la revendication précédente, comprenant une carte à microcircuit (110), par exemple de format ID-000, l'application étant enregistrée dans un microcircuit de la carte.

## Patentansprüche

1. Verfahren zur Initialisierung eines Gesprächs, umfassend die Schritte:
- Erhalten (3030) eines durch einen Benutzer eines anrufenden Telekommunikationsendgeräts zusammengestellten Präsentationsinhalts,
- dann, nachdem der Inhalt erhalten wurde, Senden (3040) des Inhalts an ein anzurufendes Telekommunikationsendgerät (300),
- und Anrufen (3060) des anzurufenden Telekommunikationsendgeräts (300) durch das anrufende Telekommunikationsendgerät (100), wobei das Anrufen (3060) eine Übertragung einer Leitungskennung des anzurufenden Endgeräts durch das anrufende Endgerät (100) an eine Vermittlungsstelle (210) umfasst,
wobei die Schritte des Erhaltens und dann des Sendens des Inhalts auch durch das anrufende Telekommunikationsendgerät (100) durchgeführt werden, wobei das Senden (3040) des Inhalts das Senden einer SMS-Nachricht, einer USSD-Nachricht oder einer MMS-Nachricht umfasst,
wobei das Verfahren **dadurch gekennzeichnet ist, dass** das Anrufen des anzurufenden Endgeräts erst durchgeführt wird nach dem:
- Verstreichen einer vorbestimmten Dauer (3050) nach dem Senden des Präsentationsinhalts, oder
- Empfangen einer Empfangsbestätigung des Inhalts, die dessen Empfang durch das anzurufende Telekommunikationsendgerät bescheinigt.

2. Verfahren zur Initialisierung eines Gesprächs nach Anspruch 1, wobei das Erhalten (3030) eines Präsentationsinhalts das Erhalten eines Texts des Benutzers des anrufenden Endgeräts umfasst.

3. Verfahren zur Initialisierung eines Gesprächs nach Anspruch 2, wobei das Erhalten (3030) eines Textes in einem Pop-up-Fenster erfolgt.

4. Verfahren zur Initialisierung eines Gesprächs nach einem der vorhergehenden Ansprüche des Initialisierungsverfahrens, wobei der Präsentationsinhalt mit einem Namen des Anrufers gesendet wird, damit der Name durch den Inhalt ergänzt angezeigt wird.

5. Verfahren zur Initialisierung eines Gesprächs nach einem der vorhergehenden Ansprüche des Initialisierungsverfahrens, wobei das Telekommunikationsendgerät ein mobiles Endgerät ist.

6. Verfahren zur Initialisierung eines Gesprächs nach einem der vorhergehenden Ansprüche des Initialisierungsverfahrens, wobei der Inhalt durch kryptographische oder verschlüsselte Mittel unterzeichnet wird.

7. Audio-Gesprächsverfahren, das durch ein Initialisierungsverfahren nach einem der vorhergehenden Ansprüche des Initialisierungsverfahrens initialisiert wird.

8. Informatikanwendung, die geeignet ist, wenn sie durch einen Prozessor (130) eines Telekommunikationsendgeräts (100) ausgeführt wird, die Schritte eines Verfahrens nach einem der vorhergehenden Ansprüche des Initialisierungsverfahrens durchzuführen.

9. Anwendung nach dem vorhergehenden Anspruch, die über einen Betriebsmodus verfügt, in dem die Anwendung den Benutzer als Reaktion auf das Wählen einer Telefonnummer und einer alphanumerischen Folge zum Auslösen der Funktion zur Definition eines Inhalts durch den Benutzer auffordert, einen Präsentationsinhalt zu identifizieren.

10. Anwendung nach einem der vorhergehenden Ansprüche, die über einen Betriebsmodus verfügt, in dem sie versucht, jedes Mal, wenn der Benutzer eine Telefonnummer wählt, einen Präsentationsinhalt zu erhalten.

11. Anwendung nach einem der vorhergehenden Anwendungsansprüche, die über einen Betriebsmodus verfügt, in dem sie den Benutzer jedes Mal, wenn der Benutzer eine Telefonnummer wählt, fragt, ob er einen Präsentationsinhalt schicken möchte.

12. Tragbare elektronische Einheit (110), die einen Speicher umfasst, in dem eine Anwendung nach einem der vorhergehenden Anwendungsansprüche gespeichert ist.

13. Tragbare elektronische Einheit nach dem vorhergehenden Anspruch, die eine Mikroschaltungskarte (110), zum Beispiel vom Format ID-000, umfasst, wobei die Anwendung in einer Mikroschaltung der Karte aufgezeichnet ist.

## Claims

1. A method for initiating a conversation comprising steps of:
- obtaining (3030) a presentation content composed by a user of a calling telecommunications terminal,
- then, once said content is obtained, emitting (3040) said content to a telecommunications terminal to be called (300),
- and calling (3060) by the calling telecommunications terminal (100) said telecommunications terminal to be called (300), the call (3060) comprising a transmission by the calling terminal (100) of a line identifier of said terminal to be called to a telephone switch (210),
the steps of obtaining and then emitting the content also being carried out by said calling telecommunications terminal (100), the emission (3040) of said content comprising the emission of an SMS message, a USSD message, or an MMS message,
the method being **characterized in that** the call of the terminal to be called is made only after:
- a predetermined duration (3050) has elapsed after the emission of the presentation content, or
- an acknowledgment of receipt of the content is received, acknowledging receipt of the latter by the telecommunications terminal to be called.

2. The method for initiating a conversation according to claim 1, wherein obtaining (3030) a presentation content comprises obtaining a text from the user of the calling terminal.

3. The method for initiating a conversation according to claim 2, wherein obtaining (3030) a text is done in a pop-up window.

4. The method for initiating a conversation according to any of the preceding initiation method claims, wherein the presentation content is emitted with a name of the caller so that said name is displayed completed by said content.

5. The method for initiating a conversation according to any of the preceding initiation method claims, wherein the telecommunications terminal is a mobile terminal.

6. The method for initiating a conversation according to any of the preceding initiation method claims, wherein the content is signed by cryptographic means or is encrypted.

7. An initiated audio conversation method by an initialization method according to any of the preceding initiation method claims.

8. A computer application able, when implemented by a processor (130) of a telecommunications terminal (100), to execute the steps of a method according to any of the preceding initiation method claims.

9. The application according to the preceding claim, having an operating mode in which the application requests the user to identify a presentation content in reaction to the user dialing a telephone number and an alphanumeric sequence for triggering the function of definition of a content.

10. The application according to any of the preceding application claims, having an operating mode in which it seeks to obtain presentation content each time the user dials a telephone number.

11. The application according to any of the preceding application claims, having an operating mode in which it asks the user, each time he/she dials a telephone number, if he/she wishes to send presentation content.

12. A portable electronic entity (110) including a memory in which an application is registered according to any of the preceding application claims.

13. The portable electronic entity according to the preceding claim, comprising a microcircuit card (110), for example of ID-000 format, the application being registered in a microcircuit of the card.
